# EUROPEAN PATENT APPLICATION

(11) **EP 2 469 458 A1**
(43) Date of publication of application: **27.06.2012**
(21) Application number: 10196174.6
(22) Date of filing: 21.12.2010
(51) Int. Cl.: G06Q 20/00

(54) **A System to enable underage internet users execute internet payment transactions**

(71) Applicant: Lawless, Peter Thomas, Delgany Wicklow (IE)
(72) Inventor: Lawless, Peter Thomas, Delgany Wicklow (IE)
(74) Representative: O'Connor, Michael Donal

(57) **Abstract**

This invention relates to a system and method of enabling underage internet users to execute internet payment transactions. There is provided a plurality of underage internet users (3, 5, 7) and a plurality of merchant internet users (9, 11, 13) all having access to the internet (2). The system (1) comprises an intermediary payment computer system (15) having stored thereon user accounts (21) with account information and separately subsidiary accounts (23) associated with the user accounts for each underage internet user. The system (15) comprises program code to execute the payment transaction using the account information of the user account (21) with which the subsidiary account is associated, and to debit the subsidiary account (23) by the amount indicated in the payment transaction. In this way, underage internet users are able to make payment transactions over the internet. Furthermore, a delivery address of the user account may be provided for shipping of goods to preserve the anonymity of the underage internet user.

## Description

### Introduction

This invention relates to a system to enable underage internet users execute payment transactions with merchant internet users over the internet. Furthermore, this invention relates to a method of processing payment transactions over the internet initiated by an underage internet user with a merchant internet user.

The Internet and the World Wide Web have revolutionised the way many shoppers buy goods and services and the way many merchants sell those goods and services to their customers. So much so, that many shoppers now make a significant proportion of their purchases online and many merchants have moved away from traditional retailing models to purely or predominantly web-based models.

There are numerous attractions for both the customer and the merchant to having the goods and services accessible over the Internet and the World Wide Web. From the customer's point of view, they can purchase the goods or services at a time and place that suits them. Furthermore, the customers can compare prices of different suppliers in a relatively easy manner and in many cases the goods can be delivered instantly over the internet. From the seller's point of view, the cost of sales is significantly lower than the more traditional retail model. In many cases, the seller will no longer require a premises in a busy shopping district and the rent and staffing costs associated therewith. In addition to the cost savings, the seller can advertise their goods or services to a massive market through their online presence.

There is however a significant problem with the current online model in that minors, those internet users below a certain age, are often excluded from making purchases online. What is meant by "minor" or "underage internet user", is a child usually under the age of 18 years of age or under the age at which it is permissible to vote and/or own a credit card in that jurisdiction. There are three main reasons why these users are often excluded from making purchases online. First of all, a credit card is often necessary in order to complete a purchase over the internet. In many jurisdictions, it is illegal for minors to own a credit card and therefore it is not possible for the minors to purchase goods or a service without the use of a third party's credit card. Secondly, in the interests of child safety, it is illegal in many jurisdictions for a seller to request a minor's address and therefore delivery of goods or services in many cases is impossible. Thirdly, parents are quite rightly concerned by the lack of regulation and the accessibility of unsuitable materials over the internet and World Wide Web. Accordingly, parents are often reluctant to allow their children to shop online for fear that they may be subjected to or purchase unsuitable merchandise.

It is widely acknowledged that in many cases minors have a significant amount of disposable income that they are willing to spend. It is also widely acknowledged that minors have embraced technology and the internet very easily, perhaps even more so than any other segment of the population because it is something that they have grown up with. It is somewhat perverse therefore that these customers with the necessary funds, desire and abilities to make purchases online are the very ones that are prevented from doing so.

Various solutions have been proposed to the above-mentioned problems. One such solution is that proposed in US Patent No. 7,206,769, in the name of Thomson Licensing. This patent discloses an electronic wallet system whereby parents can transfer funds to their children's electronic wallets thereby allowing their children participate in electronic commerce. However, the system requires smart cards, smart card readers and other specialised hardware in order to operate. There also appears to be no restriction on the content that is accessible by the children and the problem of the children having to provide a delivery address does not appear to be addressed.

Another solution is that proposed in US Patent No. 6,173,269, in the name of Zowi.com, Inc. This patent discloses a method and apparatus for executing electronic commercial transactions by minors. The websites from which goods may be purchased may be graded initially by the service and access to those sites may be restricted by the minor's parents by imposing a usage profile for the minor. Although this goes quite some way to allaying the concerns of parents, this places a substantial burden on the provider of the service or the minor's parents to review the content of the sites and determine what content is or is not appropriate. This patent also discloses the option of providing a remailer service which may be put in operation in order to protect the minor's identity and address. However, this remailer service will inevitably add expense if indeed it is used. Finally, according to this patent, it is necessary to provide a separate account in a financial institution that is independent and unsupervised relative to a fund source account. This can lead to regulatory and administrative difficulties in many jurisdictions.

Other solutions that have been proposed include pre-paid credit cards and tokens that are redeemable over the internet. However, these solutions are also limited in some respects in that in some jurisdictions it is still necessary to be above a certain age before one can use a pre-paid credit card again if delivery of goods or services is required, the minor may still have to give out their delivery address to the merchant internet user.

One system concerned with providing secure transactions generally over the internet is that disclosed in granted European Patent No. 0,791,202, in the name of PayPal, Inc. The entire disclosure of EP0,791,202 and specifically the disclosure relating to the physical components of the system and the method of operation thereof is incorporated herein by way of reference. The present invention is to an extent concerned with providing an enhancement to the system and method described in EP0,791,202. This patent describes a system in which buyers can purchase goods over the internet without having to disclose their credit card information over the open network. An intermediary party operates to guarantee payment for the sellers and process payments for the buyers and the sellers. This system enhances the security of the transactions and facilitates carrying out transactions over the internet. However, the system as described is not suitable for use by minors as the minors would typically require a credit card in order to pay for their purchases and would in many cases have to provide their address for delivery of purchases.

It is an object of the present invention to provide a system and method that overcome at least some of the problems of the known offerings that allows minors to make purchases over the internet.

### Statements of Invention

According to the invention there is provided a system to enable underage internet users execute payment transactions with merchant internet users over the internet, the system comprising an intermediary payment computer system having stored thereon:
a plurality of user accounts each of which contains account information usable to execute payment transactions;
a plurality of subsidiary accounts, each of the subsidiary accounts being associated with a corresponding user account, the subsidiary account having a balance of funds available for use by an underage internet user;
computer program code responsive to receiving a payment transaction request from a merchant internet user, to request authorization of the payment transaction request by the underage internet user; and
computer program code responsive to receiving authorization of the payment transaction request by the underage internet user, to execute the payment transaction using the account information of the user account with which the subsidiary account is associated, and to debit the subsidiary account by the amount indicated in the payment transaction request.

By having such a system, it will be possible for underage internet users, otherwise referred to as minors, to engage in electronic commerce and make purchases over the internet without having to borrow their parents credit card details in order to make the purchase. The minor uses their subsidiary account to initiate a purchase but the purchase is executed using their parent or guardian's user account. Advantageously, the minor will remain anonymous throughout the transaction and the payment is in fact made through the parent or guardian's user account. The system operates in a similar fashion to PayPal (Registered Trade Mark (RTM)) in that the credit card details are kept secret from the merchant with the extension that they are also kept secret from the child thereby further reducing the possibility of fraud. The system according to the invention solves the technical problems of enabling minors to engage in electronic commerce when they are not in possession of a credit card and maintaining the anonymity of the minors throughout the purchasing process.

In one embodiment of the invention, the user account further contains a delivery address for delivery of goods and the computer program code responsive to receiving authorization of the payment transaction request by the underage internet user further transmits the delivery address of the user account to the merchant internet user.

This is seen as a further advantageous aspect of the invention. By providing the delivery address of the user account, the minor will not have to provide their own address thereby obviating the problems of being able to deliver the ordered goods to the minor. For certain goods, such as those deliverable electronically over the internet, the delivery address may be an email address or an electronic system which is able to accept and store downloadable material, however it will be understood that the normal interpretation of delivery address will be a physical location where goods may be shipped to.

In one embodiment of the invention the goods or services offered by the merchant internet user are age-rated. This is a particularly advantageous aspect of the present invention. Each of the merchants will age-rate their goods, in a manner similar to the film classification code, so that minors will know which goods or services that they are allowed to purchase and their parent or guardian will be safe in the knowledge that the goods or services from a certain site are age appropriate for the minor. In one embodiment of the invention, the subsidiary account users will only be able to execute transactions with merchant internet users who are certified as supplying appropriate age-rated goods and services or certified as suitable for the purposes of allowing minors withdraw money from their subsidiary accounts or interact with licensed financial institutions.

In one embodiment of the invention, the subsidiary accounts contain the age of the underage internet user that uses the subsidiary account, and the system comprises means to compare the age of the user of the subsidiary account with the age-rating of the goods or services and thereafter determine whether the payment transaction is to proceed. In this way, it is possible to prevent the minor from purchasing unsuitable content over the internet. According to one aspect of the invention, the date of birth and proof of date of birth will be required as standard practice to enable mobility through the system. This will ensure that items that are not age appropriate cannot be purchased by a minor.

In one embodiment of the invention, the merchant internet user is provided with an electronic payment transaction token by the underage internet user indicating the age of the underage internet user, and the merchant internet user has the means to compare that age with the age-rating of the goods or services. This is seen as a particularly simple way of determining whether or not the minor is able to purchase the goods or services.

In one embodiment of the invention, the payment transaction request contains the age-rating of the good or service and the intermediary payment computer system has the means to compare the age of the underage internet user with the age-rating of the goods or services. This is seen as a useful alternative way of determining whether or not the minor is able to purchase the goods or services and ensures that no age related information has to be sent to the merchant.

In one embodiment of the invention there is provided a method of processing payment transactions over the internet initiated by an underage internet user with a merchant internet user in a system comprising an intermediary payment computer system, the intermediary payment computer system having stored thereon a plurality of user accounts each of which contains account information usable to execute payment transactions, and a plurality of subsidiary accounts each of which is associated with a corresponding user account and has a balance available for use by an underage internet user, the method comprising the steps of:
receiving a payment transaction request from a merchant internet user;
requesting authorization of the payment transaction request by the underage internet user;
on receiving authorization of the payment transaction request by the underage internet user, executing the payment transaction using the account information of the user account with which the subsidiary account is associated; and
debiting the subsidiary account by the amount indicated in the payment transaction.

In one embodiment of the invention, the method comprises the additional step of transmitting a delivery address of the user account to the merchant internet user on receiving authorization of the payment transaction.

In one embodiment of the invention, the subsidiary accounts contain the age of the underage internet user that uses the subsidiary account, and the payment transaction request contains an age-rating of the good or service that the underage internet user wishers to buy, the method comprises the additional steps of:
comparing the age of the user of the subsidiary account with the age-rating of the goods or services; and
thereafter determining whether the payment transaction is to proceed.

### Detailed Description of the Invention

The invention will now be more clearly understood from the following description of some embodiments thereof given by way of example only with reference to the accompanying drawings, in which:-
Figure 1 is a diagrammatic representation of a system according to the invention;
Figure 2 is a flow diagram of the method according to the invention;

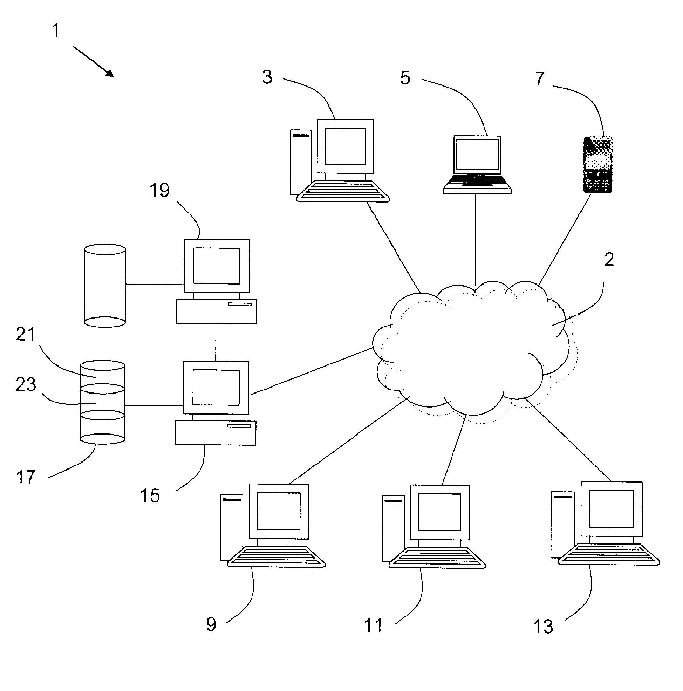

Referring to Figure 1, there is shown a diagrammatic representation of the system according to the present invention, indicated generally by the reference numeral 1, comprising a plurality of underage internet users represented by the computing devices that they use to connect to the internet 2, and in this case represented by a personal computer 3, a laptop 5 and a mobile phone 7. These computing devices 3, 5, 7 have been shown for diagrammatic purposes only and it will be understood that other computing devices capable of accessing the internet 2 could be used in their stead such as, but not limited to, a personal digital assistant, netbook, iPad (RTM), games console, mobile telephone, smart phone, iPhone (RTM), mobile computing device or like device. The system 1 further comprises a plurality of merchant internet users, also represented by their computing devices that they use to connect to the internet 2, and in this case represented by personal computers 9, 11 and 13. There is further provided an intermediary payment computer system 15 having accessible memory 17 and a payment settlement computer 19 accessible by the intermediary payment computer system 15.

The intermediary payment system's accessible memory 17 has stored thereon a plurality of user accounts 21 each of which contains account information usable to execute payment transactions and a plurality of subsidiary accounts 23 each of which is associated with a corresponding user account 21. By this it will be understood that each of the plurality of subsidiary accounts is associated with a different user account rather than all of the subsidiary accounts being associated with the same user account. A user account may have more than one subsidiary account associated therewith but typically a subsidiary account will only be associated with a single user account. The user account has delivery address information for the person who owns the user account, typically a parent or guardian of the underage internet user. The subsidiary account has a balance of funds available for use by an underage internet user that has access to that subsidiary account.

The intermediary payment computer system 15 has computer program code stored thereon that in response to receiving a payment transaction request from a merchant internet user 9, 11, 13 via the internet 2, requests authorization of the payment transaction request by the underage internet user 3, 5, 7. The intermediary payment computer system 15 also has computer program code that in response to receiving authorization of the payment transaction request by the underage internet user, executes the payment transaction with the payment settlement computer 19 using the account information of the user account 21 with which the subsidiary account 23 is associated and debits the subsidiary account 23 by the amount indicated in the payment transaction.

In use, a parent or guardian, hereinafter simply referred to as a parent for simplicity, sets up their own user account 21 or may indeed already have their own user account set up, such as a PayPal (RTM) account. The user account 21 includes the account information usable to execute payment transactions, such as their PayPal (RTM) account details. The account information will also usually include the owner of the user account's credit card details so that their own purchases may be settled however it will be understood that the credit card details are never sent to the merchant as is the normal practice of PayPal (RTM) accounts. The user account will also include a delivery address for the parent including one or both of an email address and a shipping address and any other details necessary to complete a payment transaction. Preferably, these details will have been provided in an offline environment for enhanced security.

The parent then establishes a subsidiary account 23 of their user account 21 for the underage internet user, usually but not exclusively, their child. In certain embodiments of the invention, the establishment of the subsidiary account will include the parent providing information used in the creation of the dynamic age-rating-token that will be used for age verification in payment transaction requests made by the minor. The parent transfers money into the subsidiary account 23 on a periodic basis similar to providing an allowance or pocket money to the child. However, in this case the pocket money is also available for use in an online environment. The system acts in a similar fashion to a minor bank account, with the additional features that it can be accessed on line and the funds used to make online purchases with approved merchant users. The parent provides a username and a password for the child to use to access the subsidiary account 23 as well as the age or date of birth of the child (requirement as stated above). Other information such as spending limits, prohibited content or permission levels may be provided. Once the subsidiary account is established and money has been transferred into the subsidiary account, the child (underage internet user) is able to begin making payment transactions over the internet. In some instances a card may be associated with the subsidiary account allowing the user to access their funds as they would with a normal debit or offline payment card.

In order to make a payment transaction, for example the purchase of an iTune (RTM), the underage internet user accesses the iTunes (RTM) website server, in this case the merchant internet user 9, through the internet 2 using their computing device 3. The underage internet user selects the track that they wish to purchase and selects a Pocket Money Online (PMO) payment option on the checkout screen of the iTunes (RTM) website. Alternatively, the underage internet user may select a PayPal (RTM) or like option on the checkout screen. Preferably, there will be a dedicated icon on the checkout screen for this option. The underage internet user may be prompted by the merchant internet user 9 to provide details of their subsidiary account 23 or these may be provided automatically. In one embodiment, there will be no way for the merchant to distinguish that the account is a subsidiary account operated by a minor and not a user account.

The merchant internet user 9 then transmits a payment transaction request to the intermediary payment computer system 15. The intermediary payment computer system 15 receives the request and transmits an authorization request to the underage internet user 3. The underage internet user 3 can then either authorize or refuse the authorization request. If the underage internet user refuses the authorization request, the transaction can be cancelled or if the underage internet user has already received the goods a limitation may be placed on their account. If the underage internet user 3 authorizes the payment transaction request, the intermediary payment computer system 15 will use the account information in the user account 21 associated with the subsidiary account 23 to execute the payment transaction and in turn pay the merchant internet user 9 and will also debit the subsidiary account 23 by the amount indicated in the payment transaction.

The merchant internet user can then, if they have not already done so, transfer the goods or services to the underage internet user 3. If the goods are to be transferred physically (such as a DVD or item of goods), the merchant internet user is provided with a postal address of the user account 21 associated with the subsidiary account by the intermediary payment computer system 15. In other words, the parent's postal address is provided to the merchant internet user. At all times, the identity of the underage internet user is not provided to the merchant internet user.

According to another advantageous aspect of the present invention, it is envisaged that all of the merchant internet users' websites will have their goods and services classified according to an age-rating system similar to that in operation in many countries for film classification, toys or games. In such age-rating systems, an advisory notice is placed on the advertisement or packaging for the film, toy or game showing the age a person should be in order to watch the film, use the toy or play the game. Parents can use such systems to determine whether or not the content is suitable for their children. In this case however, the goods or services offered on the website will be classified according to their appropriateness for a particular age group. For example, on a website selling music tracks such as iTunes, a General certificate may be given to the Beatles tracks indicating that they are suitable for all users, regardless of age, whereas a 15 certificate may be given to tracks with explicit lyrics. Only underage internet users aged 15 or over will be able to purchase the content with a 15 certificate through the system. It is envisaged that in addition to the merchant internet user applying the appropriate age classification rating on a good or service, that the parents or legal guardians will also be able to "rate" the products, in a manner similar to the eBay (RTM) rating system. These ratings and comments will be used by a trusted independent 3^{rd} party, whose responsibility it is to certify merchant internet users and their goods and services.

There are two ways in which a check may be carried out to determine the suitability of the goods or services. The first way entails the underage internet user transmitting a payment transaction token to the merchant internet user indicating that they wish to buy a product or service. The payment transaction token will preferably be encrypted and will contain the age of the underage internet user sending the token. The age will be taken from the subsidiary account 23 record which was established by the parent and therefore the underage internet user will not be in a position to modify the age contained in the payment transaction token. The merchant internet user will have appropriate software thereon to decrypt the token and establish the age of the internet user. The merchant internet user computing device will thereafter compare the age of the underage internet user with the age-rating of the product or service that the underage internet user wishes to purchase. If the age of the underage internet user is less than the age rating of the good or service, the proposed purchase will be deemed unsuitable and the transaction will be cancelled. On the other hand, if the age of the underage internet user is the same as or greater than the age-rating, the purchase will be allowed to proceed as described above.

The second way in which a check may be carried out to determine the suitability of the goods or services is carried out not by the merchant internet user 9, 11, 13, but is carried out instead by the intermediary payment computer system 15. When the intermediary payment computer system 15 receives a payment transaction request from the merchant internet computer 9, 11, 13, the payment transaction request will contain the age-rating of the good or service that is the subject of the payment transaction request. The intermediary payment computer system 15 then compares this age-rating with the age of the underage internet user 3, 5, 7 stored as part of their subsidiary account record 23. If the intermediary payment computer system 15 determines that the age of the underage internet user is less than the age-rating of the good or service, the proposed purchase will be deemed unsuitable and the transaction will be cancelled. Alternatively, if the age of the underage internet user is the same as or greater than the age-rating, the purchase will be allowed to proceed as described above.

The payment transaction token, otherwise referred to as the dynamic age-rating-token, is initially created with the assistance of the parent or legal guardian, who is legally entitled to certify the age of the minor and who is the owner of the user account for which the subsidiary account is created. The dynamic age-rating-token is created by the parent entering the minor's date of birth into the system, upon which an age-rating-token particular to the subsidiary account and by extension the minor that will operate the subsidiary account, is created. A merchant internet user device can, by examining the credentials of this age-rating-token provided to them during a transaction, certify that the minor attempting to execute a commercial transaction for an age rated good or service, is entitled to purchase that good or service. The date of birth entered to create the age-rating-token cannot be altered by the minor and can only be altered by the person legally entitled to do so as described above.

The dynamic age-rating-token is created by subtracting the date of birth of the minor from the current verifiable date, provided by a trustworthy third party system, and applying the appropriate age rating in years to the token. For example, if a child born on January 1^{st} 2000 attempts on February 15^{th} 2010 to purchase an item with a 12+ certificate, they will be refused. They will however be allowed to purchase a product or service with a 10+ age certificate. It will be further understood that once the date of birth of the minor is inserted by the person legally entitled to do so, they are not required to continuously monitor the age-rating-token and the dynamic age-rating-token will be updated automatically periodically, for example each day or each time the minor attempts to make a purchase to ensure that the age-rating-token remains appropriate as the minor gets older.

The intermediary payment system 15 is preferably similar in structure to the PayPal (RTM) system and may have two distinct computing units (not shown), a front end computing unit with the ability to maintain the internet address information of the underage internet users 3, 5, 7 and merchant internet users 9, 11, 13 and means for sending and receiving messages from the underage and merchant internet users, and a back end computing unit isolated from the internet and internet address information but with access to the user accounts 21 and the account information including financial information contained therein, the subsidiary accounts 23, and having means to communicate with the payment settlement computer 19.

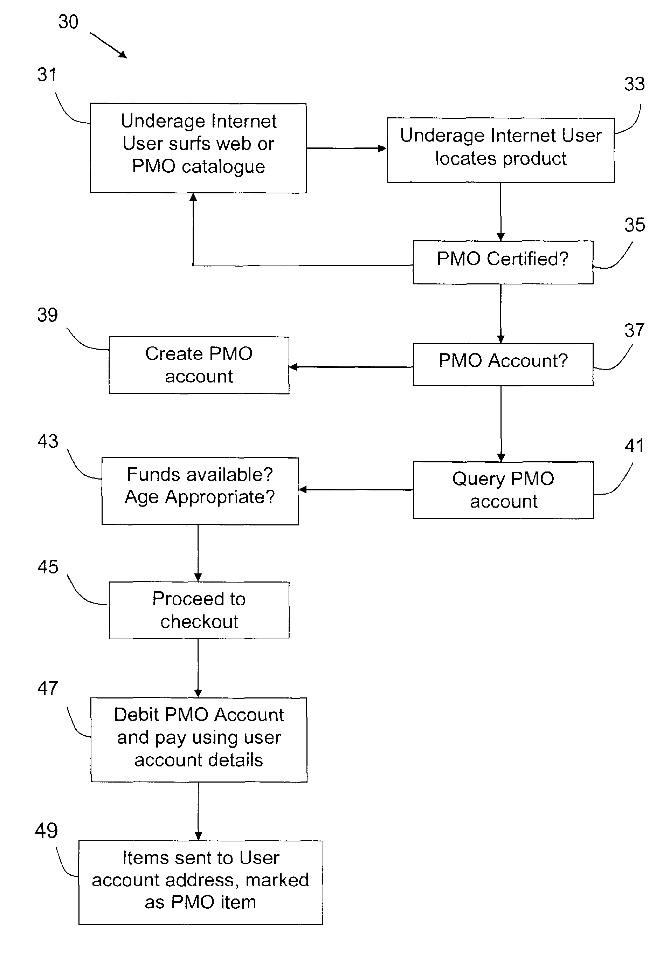

Referring to Figure 2 of the drawings, there is shown a flow diagram of the method steps used to implement the present invention, indicated generally by the reference numeral 30. The system and method are commonly referred to as "Pocket Money Online" (PMO). The method comprises the initial step 31 of the underage internet user surfing the web or a PMO catalogue. In step 33, the underage internet user locates a product that they wish to purchase. In step 35, a check is made to see whether the website is PMO safe certified. If the website is not PMO safe certified, a PMO purchase through this site will not be possible. If however the site is PMO safe certified, the child will be allowed to proceed with a purchase.

In step 37, a check is made to see whether the underage internet user has a PMO account. If the answer is no, the method proceeds to step 39 where the parent or guardian of the underage internet user creates the PMO account for the underage internet user. Once the account is set up, a check is performed in step 43 to see whether sufficient funds are in the PMO subsidiary account to purchase the good or service and whether the good or service is age appropriate. If at step 37, the underage internet user has a PMO account, the method will proceed to step 41 to query the PMO account before proceeding on to step 43 where it is determined whether sufficient funds are in the PMO subsidiary account 23 to purchase the good or service and whether the good or service is age appropriate. If the necessary funds are available and the content is age appropriate, the method proceeds to checkout step 45.

In step 47, the money required to purchase the good is subtracted from the PMO subsidiary account however the account information of the parent, typically their PayPal (RTM) account details, taken from their user account 21 is used to make the actual purchase. Instead of the user account being billed in the normal manner, i.e. their credit card being used by PayPal to make the payment to PayPal and then PayPal settling the account with the merchant, the subsidiary account is debited by the appropriate amount. Finally, in step 49, the transaction is completed by the merchant internet user sending the goods to the parents address from their user account 21. In certain embodiments, the goods will be marked as a PMO account item so that the parent can recognize that the goods are items purchased by their child and can pass the goods on to the child. A PMO code may be placed on the goods so that if there is more than one PMO user in the household, the parent can use the code to identify which of their children the goods belong to.

Throughout the specification the terms "internet" and "World Wide Web" have been used practically interchangeably and it will be understood that when reference is made to an underage internet user or a merchant internet user accessing the internet, this is also intended to mean an underage internet user or a merchant internet user accessing the World Wide Web. Furthermore, reference has been made to the internet but it will be understood that this is also intended to cover the mobile internet accessible by users of mobile telephones and like devices. The underage internet user's device is any device capable of connecting to a merchant internet site, which provides goods, services or a means of accepting charitable donations. The underage internet user's device may connect to the merchant internet site over a LAN, WAN, Phone, IP telephony, WiFi, GPS, Infrared, Bluetooth, internet or other communication network/protocol.

Throughout the specification, reference has also been made to a system in which the underage internet user has a balance of funds available for their use. This has typically been provided by a positive balance in the subsidiary account in their favour by a parent or guardian lodging money into their subsidiary account in advance of the underage internet user making any purchases. It will be understood however that the system could also be operated in a manner similar to a credit facility in which the child will have the ability of making purchases up to a predetermined value, usually over a fixed time period, effectively on credit and the parent will settle the balance through a direct debit, credit card payment or other mechanism periodically, such as at the end of each month. For example, the underage internet user may be allowed to make payment transactions totaling €50.00 in any given month, their allowance for that month, and the account will be settled by the parent at the end of the month. In this way, the available balance will effectively be access to an amount of credit. Again however, the amount of credit available will be strictly monitored and controlled by the operator of the user account.

Furthermore, in the description, reference is made to the account information of the user account being used to complete a transaction. It will be understood that the identity of the owner of the user account may also be used to complete the transaction. For example, when goods are to be shipped to the underage internet user, the goods will be shipped under the name of the owner of the user account and not the name of the operator of the subsidiary account.

It will be further understood that the method according to the present invention will be performed largely in software and therefore the present invention extends also to computer programs, on or in a carrier, comprising program instructions for causing a computer to carry out the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM, a hardware circuit, a Flash memory, Solid State Devices (SSD) or Secure Digital Cards (SD & SDHC cards). In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on more than one computing device and in fact could be performed over two, three or more machines with certain parts of the system, the intermediary payment computer system 15 in particular, being located on one device and other parts of the system being located on another device. The devices may be part of a LAN, WLAN or could be connected together over a communications network including but not limited to the internet. Many of the method steps could be performed "in the cloud", meaning that remotely located processing power may be utilised to process certain method steps of the present invention. Accordingly, it will be understood that many of the method steps may be performed remotely, by which it is meant that the method steps could be performed either on a separate machine in the same locality or jurisdiction or indeed on a separate machine or machines in one or more remote jurisdictions. The present invention and claims are intended to also cover those instances where the system is implemented and the method is performed across two or more machines located in one or more jurisdictions.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the claims.

## Claims

1. A system (1) to enable underage internet users (3, 5, 7) execute payment transactions with merchant internet users (9, 11, 13) over the internet (2), the system comprising an intermediary payment computer system (15) having stored thereon:
a plurality of user accounts (21) each of which contains account information usable to execute payment transactions;
a plurality of subsidiary accounts (23), each of the subsidiary accounts being associated with a corresponding user account, the subsidiary account having a balance of funds available for use by an underage internet user;
computer program code responsive to receiving a payment transaction request from a merchant internet user (9, 11, 13), to request authorization of the payment transaction request by the underage internet user; and
computer program code responsive to receiving authorization of the payment transaction request by the underage internet user (3, 5, 7), to execute the payment transaction using the account information of the user account (21) with which the subsidiary account is associated, and to debit the subsidiary account (23) by the amount indicated in the payment transaction request.

2. A system (1) as claimed in claim 1 in which the user account (21) further contains a delivery address for delivery of goods and the computer program code responsive to receiving authorization of the payment transaction request by the underage internet user further transmits the delivery address of the user account to the merchant internet user.

3. A system (1) as claimed in claim 1 or 2 in which the goods or services offered by the merchant internet user (9, 11, 13) are age-rated; and in which the subsidiary accounts (23) contain the age of the underage internet user (3, 5, 7) that uses the subsidiary account, and the system (1) comprises means to compare the age of the user of the subsidiary account with the age-rating of the goods or services and thereafter determine whether the payment transaction is to proceed.

4. A system (1) as claimed in claim 3 in which the merchant internet user (9, 11, 13) is provided with an electronic payment transaction token by the underage internet user (3, 5, 7) indicating the age of the underage internet user, and the merchant internet user (9, 11, 13) has the means to compare that age with the age-rating of the goods or services.

5. A system (1) as claimed in claim 3 in which the payment transaction request contains the age-rating of the good or service and the intermediary payment computer system (15) has the means to compare the age of the underage internet user with the age-rating of the goods or services.

6. A method of processing payment transactions over the internet (2) initiated by an underage internet user (3, 5, 7) with a merchant internet user (9, 11, 13) in a system comprising an intermediary payment computer system (15), the intermediary payment computer system having stored thereon a plurality of user accounts (21) each of which contains account information usable to execute payment transactions, and a plurality of subsidiary accounts (23) each of which is associated with a corresponding user account and has a balance available for use by an underage internet user, the method comprising the steps of:
receiving a payment transaction request from a merchant internet user (9, 11, 13);
requesting authorization of the payment transaction request by the underage internet user (3, 5, 7);
on receiving authorization of the payment transaction request by the underage internet user, executing the payment transaction using the account information of the user account (21) with which the subsidiary account is associated; and
debiting the subsidiary account (23) by the amount indicated in the payment transaction.

7. A method as claimed in claim 6 comprising the additional step of transmitting a delivery address of the user account to the merchant internet user (9, 11, 13) on receiving authorization of the payment transaction.

8. A method as claimed in claims 6 or 7 in which the subsidiary accounts (23) contain the age of the underage internet user that uses the subsidiary account, and the payment transaction request contains an age-rating of the good or service that the underage internet user wishers to buy, the method comprises the additional steps of the intermediary payment computer system (15):
comparing the age of the user of the subsidiary account with the age-rating of the good or service; and
thereafter determining whether the payment transaction is to proceed.
